# EUROPEAN PATENT APPLICATION

(11) **EP 4 550 129 A1**
(43) Date of publication of application: **07.05.2025**
(21) Application number: 23848990.0
(22) Date of filing: 17.05.2023
(51) Int. Cl.: G06F 9/38

(54) **INSTRUCTION EXECUTION METHOD AND DEVICE**

(30) Priority: 02.08.2022 CN 202210924615
(71) Applicant: Huawei Technologies Co., Ltd., Shenzhen, Guangdong 518129 (CN)
(72) Inventor: ZHU, Fan, Shenzhen, Guangdong 518129 (CN); ZHOU, Ruoyu, Shenzhen, Guangdong 518129 (CN); SU, Fang, Shenzhen, Guangdong 518129 (CN); ZHOU, Xiping, Shenzhen, Guangdong 518129 (CN); LIAO, Heng, Shenzhen, Guangdong 518129 (CN)
(74) Representative: Maiwald GmbH
(86) International application number: PCT/CN2023/094685
(87) International publication number: WO 2024/027280

(57) **Abstract**

Embodiments of this application provide an instruction execution method. The method includes: determining that an execution status of a first block in a queue is a completed state, where the queue includes a plurality of blocks, the first block is a block with a smallest number in the queue, and the first block includes at least one instruction; changing a status of a processor based on an execution result of an instruction in the first block; and deleting the first block from the queue. In technical solutions of this application, a structured instruction set architecture can be used in the processor, to resolve a problem that a low-level instruction blocks a hardware resource, and improve program running efficiency.

## Description

This application claims priority to Chinese Patent Application No. 202210924615.8, filed with the China National Intellectual Property Administration on August 2, 2022 and entitled "INSTRUCTION EXECUTION METHOD AND APPARATUS", which is incorporated herein by reference in its entirety.

### TECHNICAL FIELD

Embodiments of this application relate to the computer field, and specifically, to an instruction execution method and an apparatus.

### BACKGROUND

Currently, an unstructured instruction set architecture is used in mainstream processors. In this instruction set architecture, each instruction may be committed only after an instruction before the instruction is committed. As a result, a low-level instruction may block a hardware resource, and consequently a subsequent instruction cannot be committed.

A structured instruction set architecture divides a program into two levels: a block and an in-block micro-instruction. A single block is a set of several micro-instructions, and a program is a set of several blocks. The structured instruction set architecture can resolve a problem that a low-level instruction blocks a hardware resource. However, because the structured instruction set architecture cannot ensure in-order commit of instructions, for a precise exception that may occur at any time, a precise status in which all instructions before the exception are executed and all instructions after the exception are not executed cannot be ensured, and the program is restarted only after an internal exception occurs. Therefore, the structured instruction set architecture cannot be used in a processor.

Therefore, how to use a structured instruction set architecture in a processor to prevent a low-level instruction from blocking a hardware resource is an urgent technical problem to be resolved.

### SUMMARY

Embodiments of this application provide an instruction execution method and an apparatus, to resolve a problem that a low-level instruction blocks a hardware resource, and improve program running efficiency.

According to a first aspect, an instruction execution method is provided. The method includes: determining that an execution status of a first block in a queue is a completed state, where the queue includes a plurality of blocks, the first block is a block with a smallest number in the queue, and the first block includes at least one instruction; changing a status of a processor based on an execution result of an instruction in the first block; and deleting the first block from the queue.

Embodiments of this application provide the instruction execution method. The queue is used to ensure in-order commit of instructions in a structured instruction set, so that the structured instruction set can be used in the processor, and a block division mechanism specific to the structured instruction set can be used, to release, in advance, a hardware resource occupied by an instruction that has been executed, and resolve a problem that a low-level instruction blocks a hardware resource.

It should be understood that a block is a piece of linear program code, and a program can be entered only from beginning of the code, and the program can be left only from a last line of the code. A block is a set of several instructions, and a program is a set of several blocks.

It should be understood that a number of a block and a number of an instruction in the queue may be stored in a reorder buffer (reorder buffer, ROB). After an instruction is executed, an execution result is stored in a physical register. Commission means changing an architecture status of the processor based on instruction execution results according to an instruction number order in the ROB. If the first block is in the completed state, it means that execution results of instructions in the first block are all stored in the physical register. Because the first block is a block with a smallest number in the queue, it means that an instruction committed next time should be an instruction in the first block. In the method provided in this application, the status of the processor is changed based on the execution results of the instructions according to an instruction number order in the first block, and then the first block in the queue is deleted.

Optionally, the first block may be a head block in the queue. After it is determined that the execution status of the first block is the completed state, the instruction in the first block is committed, and then the first block is dequeued from a head of the queue. It should be understood that, committing instructions in the first block means changing an architecture status of the processor based on instruction execution results according to an instruction order in the first block in the ROB.

Optionally, the queue may include a commission pointer indicating a next block to be committed, namely, a commission block. The first block is a commission block. In each clock cycle, execution statuses of X blocks are queried starting from the commission pointer, where X is greater than or equal to 1. It should be understood that the quantity X may be determined based on a hardware time sequence, an implementation, and a performance indicator. If the X blocks are all in a completed state, the X blocks are committed, and then the commission pointer is moved to a next to-be-committed block, namely, the commission block is updated to a next block after the X blocks. Optionally, the commission block may be the head block in the queue. After it is determined that execution statuses of the X blocks are all the completed state and the X blocks are committed, the X blocks are dequeued from the head of the queue, and the commission block is updated to a new head block.

It should be understood that a queue includes a plurality of blocks, and each block includes at least one instruction. In this application, the block division mechanism specific to the structured instruction set is used to design the structured ROB, and the queue is used to ensure a commission order between blocks, to release, in advance, the hardware resource occupied by the instruction that has been executed, and resolve the problem that the low-level instruction blocks the hardware resource.

Embodiments of this application provide the instruction execution method. The queue is used to ensure in-order commit of the instructions in the structured instruction set, so that the structured instruction set can be used in the processor, and the block division mechanism specific to the structured instruction set can be used, to release, in advance, the hardware resource occupied by the instruction that has been executed, and resolve the problem that the low-level instruction blocks the hardware resource.

With reference to the first aspect, in some implementations of the first aspect, the determining that an execution status of a first block in a queue is a completed state includes: determining that execution statuses of all instructions included in the first block are a completed state.

It should be understood that the first block includes the at least one instruction, and an execution status of an instruction includes an uncompleted state, a completed state, an abnormal state, and the like. When all the instructions in the first block are in the completed state, it is considered that the execution status of the first block is the completed state.

Embodiments of this application provide the instruction execution method. The queue is used to ensure in-order commit of the instructions in the structured instruction set, so that the structured instruction set can be used in the processor, and the block division mechanism specific to the structured instruction set can be used, to release, in advance, the hardware resource occupied by the instruction that has been executed, and resolve the problem that the low-level instruction blocks the hardware resource.

With reference to the first aspect, in some implementations of the first aspect, the method further includes: determining that a first piece is a commission piece in a second block and an instruction in the first piece is in a completed state, where the second block is any block other than the first block in the queue, the first piece is one of a plurality of pieces included in the second block, the first piece includes at least one instruction, the plurality of pieces in the second block are connected through tail pointers, and the commission piece is a piece that is in the second block and that starts to store an instruction earliest; deleting the first piece from the second block; and if the first piece is not a last piece in the second block, updating the commission piece in the second block to a piece to which a tail pointer of the first piece points.

It should be understood that a queue includes a plurality of blocks, each block includes a plurality of pieces, and each piece includes at least one instruction. The plurality of pieces are connected through a tail pointer, that is, a tail pointer of a previous piece points to a next piece. Optionally, a head pointer of a next piece may be set to point to a previous piece, to form a linked list structure.

The queue may include a number of each block, a number of each piece, and an execution status of an instruction in each piece. The execution status of the instruction may include the uncompleted state, the completed state, and the abnormal state.

Optionally, after it is determined that the first piece is the commission piece in the second block and the instruction in the first piece is in the completed state, the first piece may be deleted, to release a hardware resource occupied by the first piece. It should be understood that, after the instruction in the first piece is executed, an execution result is stored in the physical register, and a renaming unit of the physical register manages a commission order between pieces.

It should be understood that, the commission piece is the piece that is in the second block and that starts to store the instruction earliest means that the first piece is an oldest piece in the second block, or means that in all pieces included in the second block, the first piece stays in the second block for longest time, that is, the first piece is a piece that enters the second block earliest.

For example, a record queue may be used to record a commission piece in each block. If the first piece is the commission piece in the second block, and execution statuses of all instructions in the first piece are a completed state, the instructions in the first piece may be deleted, then, the commission piece in the second block in the record queue is updated. If the first piece is not the last piece in the second block, an updated commission piece is a next piece to which a tail pointer of the first piece points. If the first piece is the last piece in the second block, an execution status of the second block is set to a completed state.

Embodiments of this application provide the instruction execution method. The structured instruction set can be used in the processor, and a piece division mechanism is added on the basis of the block division mechanism of the structured instruction set, to manage instruction commission more effectively, and resolve the problem that the low-level instruction blocks the hardware resource.

With reference to the first aspect, in some implementations of the first aspect, the method further includes: determining that execution statuses of all instructions in the second block are a completed state; and setting an execution status of the second block to a completed state.

For example, when it is determined that the first piece is the last piece in the second block, and the execution statuses of all the instructions in the first piece are the completed state, it is considered that the execution statuses of all the instructions in the second block are the completed state, and the execution status of the second block in the queue is set to the completed state, to wait for in-order commit operations of subsequent blocks.

For example, a last piece in each block may carry an end marker. When it is determined that the execution statuses of all the instructions in the first piece are the completed state and the first piece carries the end marker, it is considered that the execution statuses of all the instructions in the second block are the completed state, the execution status of the second block in the queue is set to the completed state, to wait for the in-order commit operations of the subsequent blocks.

Embodiments of this application provide the instruction execution method. The queue is used to ensure in-order commit of the instructions in the structured instruction set, so that the structured instruction set can be used in the processor, and the block division mechanism specific to the structured instruction set can be used, to release, in advance, the hardware resource occupied by the instruction that has been executed, and resolve the problem that the low-level instruction blocks the hardware resource.

With reference to the first aspect, in some implementations of the first aspect, the method further includes: obtaining one or more third blocks, where the third block includes at least one instruction; and placing the one or more third blocks in the queue in ascending order of numbers.

For example, an upstream module provides five new blocks numbered 121, 122, 123, 124, and 125, and the five blocks are enqueued from a queue tail of a queue in ascending order of numbers.

Embodiments of this application provide the instruction execution method. The queue is used to ensure in-order commit of the instructions in the structured instruction set, so that the structured instruction set can be used in the processor, and the block division mechanism specific to the structured instruction set can be used, to release, in advance, the hardware resource occupied by the instruction that has been executed, and resolve the problem that the low-level instruction blocks the hardware resource.

With reference to the first aspect, in some implementations of the first aspect, the method further includes: storing an instruction in a fourth block into a second piece, where the fourth block is one of the one or more third blocks, and the second piece includes at least one vacant location for storing an instruction.

For example, when an upstream module provides a new block, for example, when an addressing module provides a new block, in embodiments of this application, a piece is selected from a currently idle second piece, and one or more pieces of micro-instruction information in the new block are recorded into the piece.

Optionally, each piece may further maintain a write pointer. If an instruction does not fill an instruction vacant location of a piece, an instruction write pointer of the piece is updated to a next instruction vacant location, so that subsequent instructions in a same block can be continuously written. If a quantity of currently entered instructions exceeds a record capacity of the current piece, a new idle piece needs to be applied for to write instructions whose quantity exceeds the capacity, and an instruction write pointer of the new piece is updated. In addition, a tail pointer of a previous piece may be updated to a number of the new piece, and a head pointer of the new piece may be updated to a number of the previous piece.

Embodiments of this application provide the instruction execution method. The structured instruction set can be used in the processor, and the piece division mechanism is added on the basis of the block division mechanism of the structured instruction set, to manage instruction commission more effectively, and resolve the problem that the low-level instruction blocks the hardware resource.

With reference to the first aspect, in some implementations of the first aspect, the method further includes: obtaining an abnormal signal and an abnormal instruction number; and deleting, from the queue, an instruction whose instruction number is greater than or equal to the abnormal instruction number.

It should be understood that, when an exception occurs in the internal processor, the abnormal instruction number may be obtained, and then the instruction whose instruction number is greater than or equal to the abnormal instruction number is deleted from the queue, to ensure a precise exception, namely, a precise status in which all instructions before the exception are executed and all instructions after the exception are not executed.

Embodiments of this application provide the instruction execution method. The block division mechanism specific to the structured instruction set is used to design the structured ROB, to ensure in-order commit of blocks and in-order commit of micro-instructions in a block, and therefore ensure correct execution of a program and the precise exception.

With reference to the first aspect, in some implementations of the first aspect, the method further includes: obtaining an interruption signal; and deleting an instruction other than an instruction with a smallest number from the queue.

It should be understood that, when an external interruption occurs, the instruction other than the instruction with the smallest number in the queue may be deleted, that is, only an instruction that enters the queue earliest is retained, to ensure a precise interruption, namely, a precise status in which all instructions before the interruption are executed and all instructions after the interruption are not executed.

Embodiments of this application provide the instruction execution method. The block division mechanism specific to the structured instruction set is used to design the structured ROB, to ensure in-order commit of the blocks and in-order commit of the in-block micro-instructions, and therefore ensure correct execution of the program and the precise interruption.

With reference to the first aspect, in some implementations of the first aspect, the method further includes: if execution of a third instruction is normally completed, setting an execution status of the third instruction to a completed state, where the third instruction is any instruction in the queue; or if an exception occurs during execution of the third instruction, setting the execution status of the third instruction to an abnormal state.

It should be understood that the queue may record a number of each block, a number of each piece, and an execution status of an instruction in each piece. The execution status of the instruction may include the uncompleted state, the completed state, and the abnormal state. Optionally, the queue may further record an exception type of an instruction.

Embodiments of this application provide the instruction execution method. The queue is used to ensure in-order commit of the instructions in the structured instruction set, so that the structured instruction set can be used in the processor, and the block division mechanism specific to the structured instruction set can be used, to release, in advance, the hardware resource occupied by the instruction that has been executed, and resolve the problem that the low-level instruction blocks the hardware resource.

According to a second aspect, an embodiment of this application provides a computer apparatus. The computer apparatus includes units configured to implement any one of the first aspect or the possible implementations of the first aspect.

According to a third aspect, a computer device is provided. The computer device includes a processor and a storage, and the processor and the storage are connected through a bus system. The processor includes the processor according to any one of the second aspect or the possible implementations of the second aspect, and the storage is configured to store a program and data that are run by the processor.

According to a fourth aspect, an embodiment of this application provides a chip system. The chip system includes a logic circuit, and the logic circuit is configured to: be coupled to an input/output interface, and transmit data through the input/output interface, to perform any one of the first aspect or the possible implementations of the first aspect.

According to a fifth aspect, an embodiment of this application provides a computer-readable storage medium. The computer-readable storage medium stores program code. When the computer storage medium is run on a computer, the computer is enabled to perform any one of the first aspect or the possible implementations of the first aspect.

According to a sixth aspect, an embodiment of this application provides a computer program product. The computer program product includes computer program code, and when the computer program code is run on a computer, the computer is enabled to perform any one of the first aspect or the possible implementations of the first aspect.

### BRIEF DESCRIPTION OF DRAWINGS

FIG. 1 is a diagram of an example of a block instruction control flow according to an embodiment of this application;
FIG. 2 is a diagram of an example of a program hierarchical structure according to an embodiment of this application;
FIG. 3 is a flowchart of an example of an instruction execution method according to an embodiment of this application;
FIG. 4 is a diagram of a structure of a micro-instruction ROB according to an embodiment of this application;
FIG. 5 is a diagram of a micro-instruction ROB operation according to an embodiment of this application;
FIG. 6 is a diagram of an instruction entry operation according to an embodiment of this application;
FIG. 7 is a diagram of another instruction entry operation according to an embodiment of this application;
FIG. 8 is a diagram of a structure of another micro-instruction ROB according to an embodiment of this application;
FIG. 9 is a diagram of an instruction flushing operation according to an embodiment of this application;
FIG. 10 is a diagram of a block ROB operation according to an embodiment of this application;
FIG. 11 is a diagram of a block entry operation according to an embodiment of this application;
FIG. 12 is a diagram of a block status update operation according to an embodiment of this application;
FIG. 13 is a diagram of a block dequeue operation according to an embodiment of this application;
FIG. 14 is a diagram of an example of a structure of a computer apparatus according to an embodiment of this application;
FIG. 15 is a diagram of an example of a structure of another computer apparatus according to an embodiment of this application; and
FIG. 16 is a diagram of an example of a computer program product according to an embodiment of this application.

### DESCRIPTION OF EMBODIMENTS

In a central processing unit (central processing unit, CPU), a pipeline technology is invented to enable execution of instructions to be performed in parallel as much as possible. However, if there is a dependency relationship between two instructions, like data dependency and control dependency, a next statement can start only after a previous instruction is completed.

An instruction set architecture (instruction set architecture, ISA) defines a set of all instructions that can be executed by a computer. Each instruction specifies a specific operation to be performed by the computer, address space in which a processed operand is stored, and an operand type.

Currently, an unstructured instruction set architecture is used in mainstream processors. A computing paradigm of out-of-order execution and in-order commit (in-order commit) is used to improve program running efficiency and cope with a precise interruption that may occur at any time. The computing paradigm of out-of-order execution and in-order commit can rearrange an execution order of an original ordered instruction list based on the instruction dependency and instruction execution cycle while ensuring result consistency, to improve performance. Operations are as follows: First cache architecture statuses changed by out-of-order execution in a reorder buffer, for example, cache the statuses in a reorder buffer (reorder buffer, ROB), and then hardware sequentially changes the architecture statuses in an order in the reorder buffer.

In the architecture of the processor, a reorder buffer mechanism is a mechanism for in-order commit of instructions and a precise exception, so that the processor can implement precise exception handling and effective hardware speculation. A principle can be simply summarized as in-order enqueue and in-order dequeue. Generally, this function is implemented by using a first in first out (first in first out, FIFO) queue.

The reorder buffer records instructions that have been transmitted in a pipeline, records information such as whether the instructions are executed and whether an exception occurs, commits, in order, executed instructions, and then stores instruction results to a register file or writes instruction results to a memory. Uncommitted instructions wait in the ROB. Therefore, a depth of the ROB is a depth of the hardware speculation. For most programs, a greater speculation depth means that there are more opportunities to mine parallelism for better performance.

The computing paradigm of out-of-order execution and in-order commit can resolve a series of problems such as the precise exception, instructions in this computing paradigm always occupy hardware resources, and the resources may be released in order only after the instructions become oldest instructions. In addition, if execution time of an oldest instruction is excessively long, for example, a load instruction is missing during accessing a level-3 cache (L3) of a cache (cache), the instruction always blocks hardware. Consequently, a subsequent instruction cannot be committed, and program running efficiency is reduced.

In a CPU cycle of a machine, a combination of micro-commands that implement a specific function forms a micro-instruction. Different from that in a definition in which a program in a common instruction set in the market is formed by several micro-instructions, a programming model of structured instructions divides a program into two levels: a block and an in-block micro-instruction. A single block is a set of several micro-instructions, and a program is a set of several blocks.

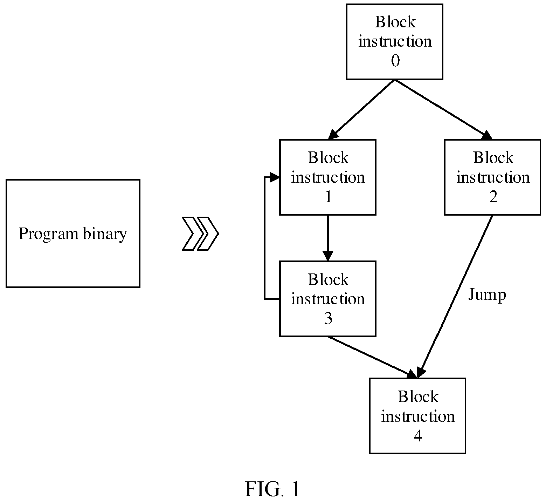

FIG. 1 is a diagram of an example of a block instruction control flow according to an embodiment of this application.

A block is a piece of linear program code, and a program can be entered only from beginning of the code, and the program can be left only from a last line of the code. The diagram of the control flow in FIG. 1 represents all paths traversed in an execution process of a program. The diagram of the control flow represents, in a form of a diagram, possible flow directions of execution of all basic blocks of a program, and can also reflect a real-time execution process of the program. For example, a block instruction 0 is an entry (a first basic block) of the program, a block instruction 4 is an exit (a last basic block) of the program, and a connection line between a basic block executed last time and a current active basic block is an execution flow direction of the program.

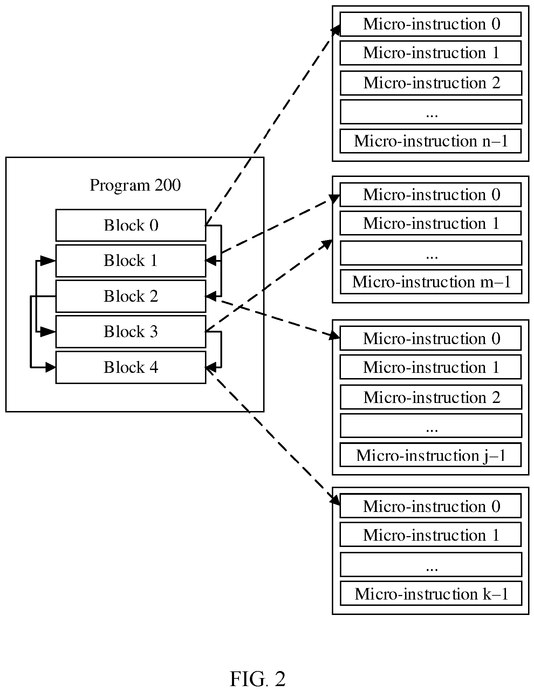

FIG. 2 is a diagram of an example of a program hierarchical structure according to an embodiment of this application. The program hierarchical structure in FIG. 2 corresponds to that in FIG. 1.

A program 200 includes a block 0, a block 1, a block 2, a block 3, and a block 4. The block 0 includes n micro-instructions, the block 1 and the block 3 each include m micro-instructions, the block 2 includes j micro-instructions, and the block 4 includes k micro-instructions, where n, m, j, and k are greater than or equal to 1.

A block is usually used to express an attribute of a block instruction, and includes information such as a type, a size, a jump type, an input/output, a quantity of memory access reads/writes, and a micro-instruction storage pointer. The block points to separately stored in-block micro-instructions by offset.

The in-block micro-instruction is usually used to express a program function, and includes many basic operation instructions, such as a computing instruction, a logic operation instruction, or a memory access instruction.

Data is transferred between the blocks 0 to 4 through shared registers between blocks, and data is transferred by using the in-block micro-instructions through private registers within blocks. Therefore, a structured instruction set includes two sets of architecture statuses.

Because a structured instruction set architecture cannot ensure in-order commit of instructions, for a precise exception that may occur at any time, a precise status in which all instructions before the exception are executed and all instructions after the exception are not executed cannot be ensured, and the program is restarted only after an internal exception occurs. Therefore, the structured instruction set architecture cannot be used in a processor.

Embodiments of this application provide a method supporting in-order commit of a structured instruction set, so that a structured instruction set architecture can be used in a processor, to resolve a problem that a low-level instruction blocks a reorder buffer, and improve program running efficiency.

The following describes technical solutions in embodiments in this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

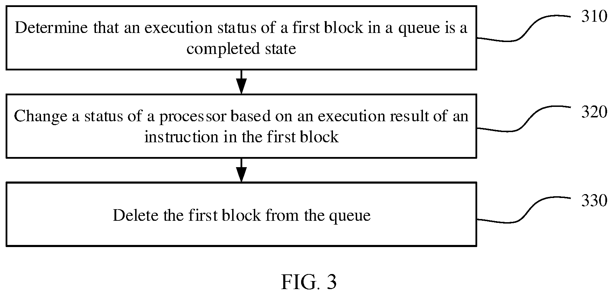

FIG. 3 is a flowchart of an example of an instruction execution method according to an embodiment of this application.

310: Determine that an execution status of a first block in a queue is a completed state.

For example, the queue includes a plurality of blocks numbered in ascending order, and each block includes at least one instruction. An execution status of an instruction may include an uncompleted state, a completed state, an abnormal state, and the like. The first block is a block with a smallest number in the queue. When all instructions in the first block are in a completed state, it is considered that the execution status of the first block is the completed state.

320: Change a status of a processor based on an execution result of an instruction in the first block.

It should be understood that a number of a block and a number of an instruction in the queue may be stored in an ROB. After an instruction is executed, an execution result is stored in a physical register. Commission means changing an architecture status of the processor based on instruction execution results according to an instruction number order in the ROB.

If the first block is in the completed state, it means that execution results of instructions in the first block are all stored in the physical register. Because the first block is a block with a smallest number in the queue, it means that an instruction committed next time should be an instruction in the first block. In the method provided in this application, the status of the processor is changed based on the execution results of the instructions according to an instruction number order in the first block.

330: Delete the first block from the queue.

After the instruction in the first block is committed, that is, after the status of the processor is changed based on the execution result of the instruction in the first block, the first block is deleted from the queue.

Optionally, the first block may be a head block in the queue. After the instruction in the first block is committed, the first block is dequeued from a head of the queue.

Optionally, the queue may include a commission pointer indicating a next block to be committed, namely, a commission block. The first block is a commission block. In each clock cycle, execution statuses of X blocks are queried starting from the commission pointer, where X is greater than or equal to 1. It should be understood that the quantity X may be determined based on a hardware time sequence, an implementation, and a performance indicator. If the X blocks are all in a completed state, the X blocks are committed, and then the commission pointer is moved to a next to-be-committed block, namely, the commission block is updated to a next block after the X blocks. Optionally, the commission block may be the head block in the queue. After it is determined that execution statuses of the X blocks are all the completed state and the X blocks are committed, the X blocks are dequeued from the head of the queue, and the commission block is updated to a new head block.

In this embodiment of this application, a block division mechanism specific to a structured instruction set is used to design a structured reorder buffer, to simultaneously excavate parallelism in two dimensions during program execution, namely, block parallelism (block parallelism) and instruction parallelism (instruction parallelism). In-order commit between blocks and in-order commit between in-block micro-instructions are ensured, to ensure correct execution of a program.

Corresponding to a microarchitecture level, in this embodiment of this application, the structured ROB is divided into two levels: a block ROB and a micro-instruction ROB. In this hierarchical mechanism, in-order commit of blocks and instructions can be decoupled. To be specific, in-order commit between blocks is ensured by using the block ROB, and in-block in-order commit is ensured by using the micro-instruction ROB.

When the in-block micro-instruction is executed, only an in-block architecture status is affected, and an external architecture status is not affected. Therefore, the micro-instruction ROB only needs to ensure an in-block commit order, and an upper-level block ROB ensures an inter-block commit order. In this embodiment of this application, the hierarchical mechanism of the structured instruction set may be used to complete commit marking of the plurality of blocks, to achieve out-of-order commit effect, without affecting precision of the architecture status. In addition, because a hardware resource of the in-block micro-instruction ROB may be released in advance, it means that a speculation depth of the structured ROB in this embodiment of this application is greater than an actual depth. This releases greater parallelism.

In this embodiment of this application, the block ROB and the micro-instruction ROB provide a block number and an instruction number respectively. Each instruction in the program has a unique block number and a unique instruction number corresponding to the instruction, so that hardware determines a location of any instruction.

In this embodiment of this application, the reorder buffer is structured based on an instruction block feature of the structured instruction set. The hardware may obtain a greater speculation depth and instruction parallelism, to improve performance.

The following separately describes in detail the micro-instruction ROB and the block ROB in embodiments of this application.

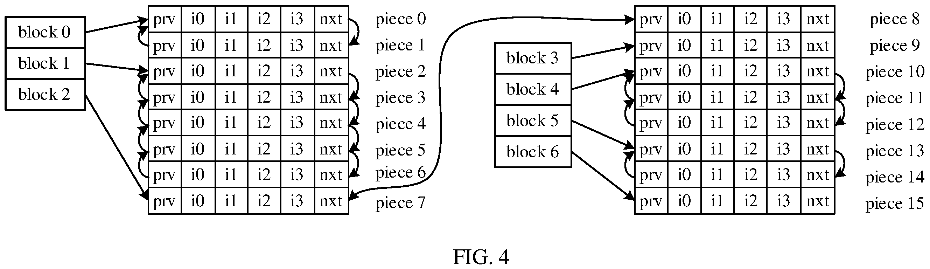

FIG. 4 is a diagram of a structure of a micro-instruction ROB according to an embodiment of this application.

The micro-instruction ROB in this embodiment of this application is of a linked list structure, and an additional in-block micro-instruction commit tracker (block instruction commit tracker, BICT) module records an execution status of each block.

As shown in FIG. 4, a piece represents a piece, a block represents a block, prv represents a head pointer, and nxt represents a tail pointer. The micro-instruction ROB includes M pieces, each piece is a segment of one ROB, and includes K instructions, where M is greater than or equal to 1, and K is greater than or equal to 1. In the structure of the micro-instruction ROB shown in FIG. 4, M=16, and K=4. Each piece may be connected through head and tail pointers to form one linked list structure. A total of M*K instructions may be stored, where * represents multiplication. A block 0 includes a piece 0 and a piece 1, a block 1 includes a piece 2 to a piece 6, a block 2 includes a piece 7 and a piece 8, a block 3 includes a piece 9, a block 4 includes a piece 10 to a piece 12, a block 5 includes a piece 13 and a piece 14, and a block 6 includes a piece 15. It should be understood that numbers of a plurality of pieces included in a block may be nonconsecutive, provided the pieces are connected through head and tail pointers. This example should not be understood as a limitation on this application.

Each piece in the micro-instruction ROB includes the following fields.

| Field | Description |
|---|---|
| Valid bit | Indicates that the piece is valid and stores an instruction. |
| Wrap-around bit | Indicates whether a number of a block is wrap-around, and is used to compare old and new numbers. |
| Head and tail pointers | Indicates a connection relationship of the piece, where only a same block has a pointer connection. |
| Block number | Indicates a sequence number of a block to which the piece belongs. |
| Piece number | Indicates a sequence number of the piece in the block to which the piece belongs. |
| Block start point marker | Indicates that the piece is a first piece in the block to which the piece belongs. |
| Block end point marker | Indicates that the piece is a last piece in the block to which the piece belongs. |
| Instruction status*K | Indicates statuses of K instructions stored in each piece, and includes information such as completion, an exception, and an exception type. |

It should be understood that the wrap-around bit is a most significant bit of the block number. For example, four bits are used to represent blocks numbered 0 to 15. When a block numbered 16 is newly added, one wrap-around bit is added, that is, five bits are used to represent the block numbered 16. A most significant bit of the block numbered 16 is 1, and other low-order bits are 0. Generally, smaller numbers of blocks and instructions indicate older blocks and instructions.

It should be understood that an oldest block is a block with a smallest number in all uncommitted blocks, an oldest piece is an uncommitted piece that enters a corresponding block earliest, and an oldest instruction is an uncommitted instruction that enters a corresponding piece earliest.

The micro-instruction ROB can ensure in-order commit of micro-instructions belonging to a same block, and only needs to ensure an in-block execution order, without ensuring that programs between blocks are also committed in order, and the upper-level block ROB ensures in-order commit between blocks. If some micro-instructions in a plurality of blocks have been completed, the micro-instructions in these blocks may be committed in order. When all instructions in a block are committed, an execution status of a block that corresponds to the block and that is in the upper-level block ROB of the block is marked as a completed state.

Because the upper-level block ROB maintains N blocks, in-block micro-instructions in a maximum of N blocks in the micro-instruction ROB are simultaneously executed. In an execution process, micro-instructions in each block are committed in order within a range of the block. At a same time, the micro-instruction ROB processes commission of micro-instructions from a plurality of blocks. To ensure correctness of in-order commit of instructions during simultaneous commission of a plurality of blocks, this application further provides a tracker module BICT, configured to record a commission progress of each block.

The BICT is a queue with a depth of N. Each entry in the queue records an execution status of a corresponding block, and includes the following fields.

| Field | Description |
|---|---|
| Valid bit | Indicates that the block is valid, that is, the block stores an instruction. |
| Block number | Indicates a number of the block. |
| Pointer in an oldest piece in the block | Indicates a location of the oldest piece in the block in the micro-instruction ROB. |

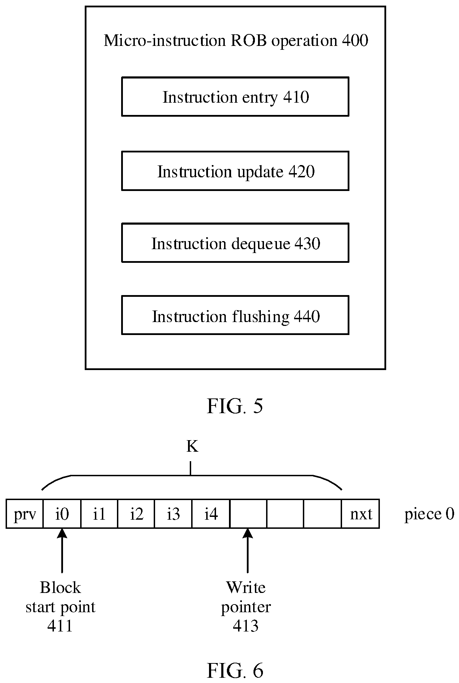

FIG. 5 is a diagram of a micro-instruction ROB operation according to an embodiment of this application.

The micro-instruction ROB operation 400 includes instruction entry 410, instruction update 420, instruction dequeue 430, and instruction flushing 440.

410: Perform instruction entry.

FIG. 6 is a diagram of an instruction entry operation according to an embodiment of this application. When an upstream module provides a new block, a micro-instruction ROB selects a piece (for example, a piece 0) from a currently idle piece, records information about one or more currently entered micro-instructions into the piece, and marks a block start point 411. In addition, each piece further maintains a write pointer 413. If K instruction vacant locations are not fully filled with instructions, the instruction write pointer 413 of the piece is updated to a next instruction vacant location, so that subsequent instructions in the same block continue to be continuously written.

The micro-instruction ROB also maintains a counter. When the counter is full, back pressure is performed on the upstream module to prevent the micro-instruction ROB from having insufficient space to write a new block. For example, FIFO threshold setting is one of pipeline back pressure mechanisms. When an amount of data stored in a downstream module exceeds an almost-full threshold (the counter is full), the downstream module indicates, through a flow control signal line, the upstream module to stop sending data; or when the amount of data stored in the downstream module is less than the almost-full threshold, the flow control signal line is in an invalid state and the upstream module continues to send data.

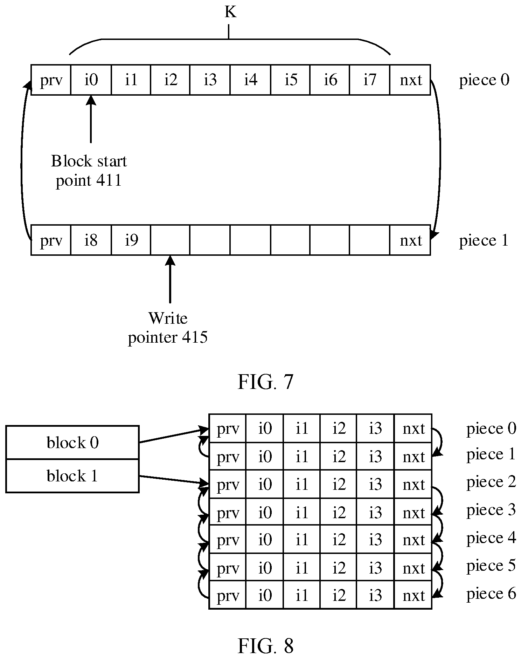

FIG. 7 is a diagram of another instruction entry operation according to an embodiment of this application. When an instruction provided by an upstream module and an instruction entered in a previous clock cycle belong to a same block, instruction information may be continuously written to a piece written in the previous clock cycle. If a quantity of currently entered instructions exceeds a record capacity of the current piece, a new idle piece (for example, a piece 1) needs to be applied for to write instructions whose quantity exceeds the capacity, and an instruction write pointer 415 of the piece is updated. In addition, hardware further updates a head pointer of the piece 1 pointing to a number of the previous piece 0, and updates a tail pointer of the previous piece 0 pointing to a number of the piece 1.

420: Perform instruction update.

Each piece in the micro-instruction ROB records an instruction status field. After an instruction is executed, a status of the instruction in the micro-instruction ROB is updated based on a number of the instruction. For example, if an instruction is normally executed, the instruction is updated to a completed state, or if an exception occurs during execution of the instruction, the instruction is updated to an abnormal state. Optionally, an exception type of the instruction may be specifically recorded.

430: Perform instruction dequeue.

For example, for ease of design, the micro-instruction ROB may choose to dequeue one piece at the same time, that is, dequeue the K instructions together. It should be understood that the dequeue herein may also mean deletion.

When the micro-instruction ROB determines that a piece in a block is an oldest piece in the block, and execution statuses of all instructions in the piece are a completed state, the micro-instruction ROB may dequeue the piece. Each instruction in an oldest piece in a block can be dequeued, provided that a last instruction in the piece to which the instruction belongs is marked as a normally completed state. Each piece may be occupied by only one block. Therefore, another blocks cannot occupy the piece in advance as long as instructions in the piece are not completely completed.

For example, that the micro-instruction ROB determines that a first piece is an oldest piece in a first block may be as follows: The micro-instruction ROB queries a BICT module whether the first piece is the oldest piece in the first block, or the BICT module may periodically send a location of an oldest piece in each block to the micro-instruction ROB.

In addition, the micro-instruction ROB does not need to ensure in-order commit between blocks. Therefore, a plurality of pieces can be dequeued at the same time. When all instructions in a block are dequeued (that is, when a piece with a block end point marker is dequeued), the micro-instruction ROB notifies an upper-level block ROB of a signal that the block is completed.

FIG. 8 is a diagram of a structure of another micro-instruction ROB according to this embodiment of this application. A block 0 includes a piece 0 and a piece 1, and a block 1 includes a piece 2 to a piece 6. For example, when a last instruction i3 in the piece 1 is marked as a normally completed state, the piece 1 may be dequeued. Because the piece 1 has a block end point mark, when the piece 1 is dequeued, the micro-instruction ROB notifies the upper-level block ROB of a signal that the block 0 is completed.

440: Perform instruction flushing.

When an exception occurs in the internal processor, the micro-instruction ROB finds an instruction younger than an abnormal instruction based on an abnormal instruction number provided by an upstream, and then flushes the abnormal instruction and the younger instruction. This can ensure a precise exception, namely, a precise status in which all instructions before the exception are executed and all instructions after the exception are not executed. It should be understood that the instruction younger than the abnormal instruction is an instruction that enters a corresponding block after the abnormal instruction.

When an external interruption occurs, the micro-instruction ROB may delete an instruction other than an oldest instruction, that is, retain only an oldest instruction in the micro-instruction ROB, to ensure a precise interruption, namely, a precise status in which all instructions before the interruption are executed, and instructions after the interruptions are not executed.

In addition, a valid bit, and an instruction write pointer in each piece, and a valid bit of each block in the BICT are updated in time based on a flushing status. It should be understood that the instruction flushing in this embodiment of this application may alternatively represent instruction deletion.

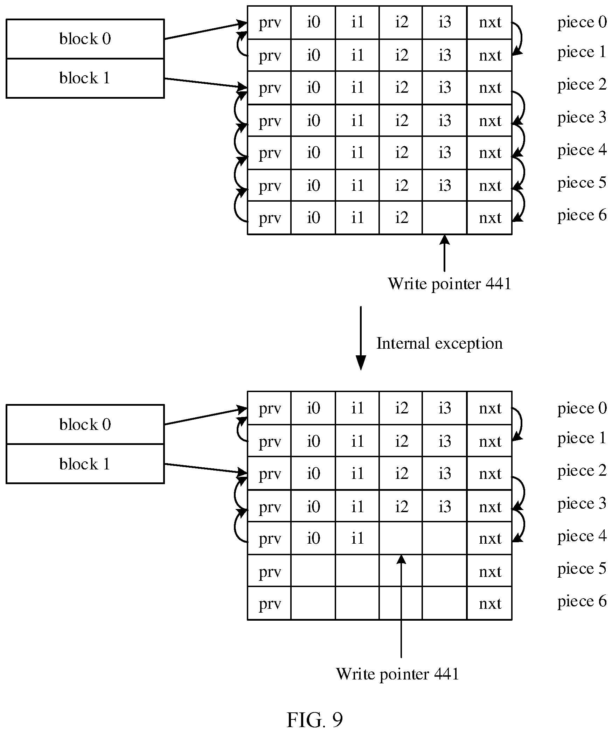

For example, FIG. 9 is a diagram of an instruction flushing operation according to an embodiment of this application. Before an internal exception occurs, a block 0 includes a piece 0 and a piece 1, and a block 1 includes a piece 2 to a piece 6. That is, a piece 0 to a piece 6 are valid, a block 0 and a block 1 in the BICT are valid, and an instruction write pointer 441 is located at a next instruction vacant location of i2 in the piece 6. When the internal exception occurs, a block number of a flushed instruction provided by the upstream is 1, and an instruction number is i2 in the piece 4. In this case, the instruction and an instruction that is younger than the instruction are flushed. In this case, the block 0 includes the piece 0 and the piece 1, and the block 1 includes the piece 2 to the piece 4. That is, the piece 0 to the piece 4 are valid, the block 0 and the block 1 in the BICT are valid, and the instruction write pointer 441 is located at a next instruction vacant location of i1 in the piece 4.

Embodiments of this application ensure a precise status and correctness of the program during out-of-order execution of blocks and out-of-order execution of in-block micro-instructions.

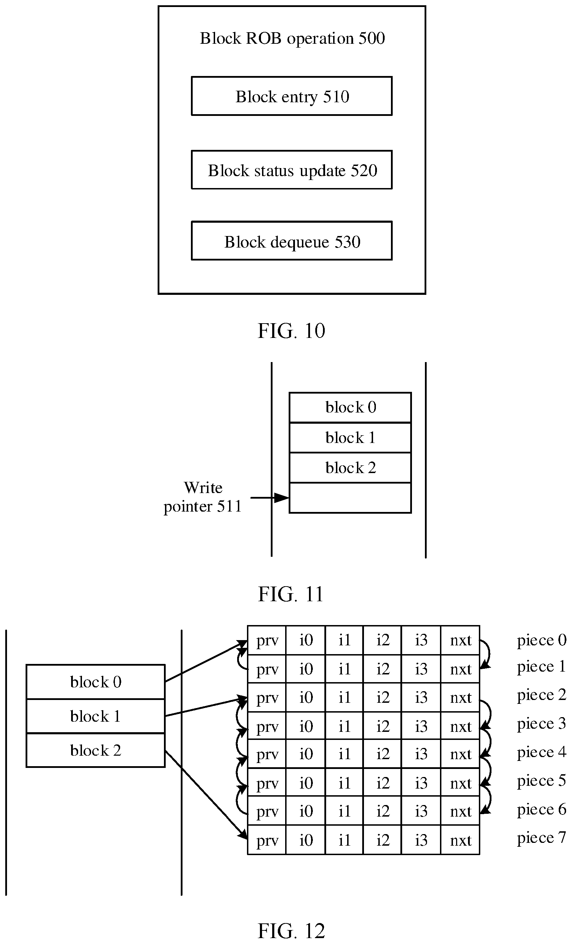

FIG. 10 is a diagram of a block ROB operation according to an embodiment of this application.

A block ROB can ensure a commission order between blocks. Each entry in the block ROB records an execution status of a block. Different from a micro-instruction ROB, the block ROB does not support simultaneous commission of a plurality of blocks. Because a commission order of in-block micro-instructions is maintained by the micro-instruction ROB, the block ROB only needs to maintain the commission order between the blocks. In this embodiment of this application, this function is implemented by using a queue, that is, a first in first out mechanism is used to ensure in-order commit between blocks.

The block ROB is implemented as a first in first out queue with a depth of N, and block entry and exit are maintained by using a read/write pointer. The block ROB records the following specific information.

| Field | Description |
|---|---|
| Valid bit | Indicates that the block is valid and occupied. |
| Wrap-around bit | Indicates whether a number of the block is wrap-around, and is used to compare old and new numbers. |
| Block number | Indicates a sequence number of the block. |
| Completion marker | Indicates whether all instructions in the block are executed. |
| Exception marker | Indicates whether an exception occurs during the execution of the block. |
| Exception type | Indicates a type of the exception that occurs during the execution of the block. |

The block ROB operation 500 includes block entry 510, block status update 520, and block dequeue 530.

510: Perform block entry.

FIG. 11 is a diagram of a block entry operation according to an embodiment of this application. Each time an upstream module delivers one or more blocks, hardware places the blocks into the queue in sequence based on an indication of the write pointer in the block ROB, records block number information, and updates the write pointer 511. In addition, the block ROB also maintains a counter. When the counter is full, back pressure is performed on the upstream module to prevent the ROB from having insufficient space to write a new block.

520: Perform block status update.

If all micro-instructions in a block are executed, the micro-instruction ROB reports the block ROB, and the block ROB marks the corresponding block as a completed state. For example, FIG. 12 is a diagram of a block status update operation according to an embodiment of this application. If all micro-instructions in a block 0 are executed, the block 0 is marked as a completed state.

If an exception occurs during execution of a micro-instruction in a block or a jump prediction error occurs, the micro-instruction ROB reports the block ROB, and marks the corresponding instruction as an abnormal state. If an oldest instruction in a current block is marked as abnormal, the block ROB reports an exception and processes the exception based on different system designs.

530: Perform block dequeue.

Dequeue of the block ROB needs to comply with a rule of in-order commit (dequeue). In this embodiment of this application, a commission pointer indicates a next to-be-committed block. In each clock cycle, execution statuses of X blocks are queried starting from the commission pointer. The quantity X may be determined based on a hardware time sequence, an implementation, and a performance indicator. If being marked as a completed state, the X consecutive blocks are all committed in order and the pointer is moved to a next to-be-committed block.

Optionally, if being marked as a completed state, Y consecutive blocks are all committed in order, and the pointer is moved to a next to-be-committed block, where X and Y are positive integers, and X is greater than or equal to Y.

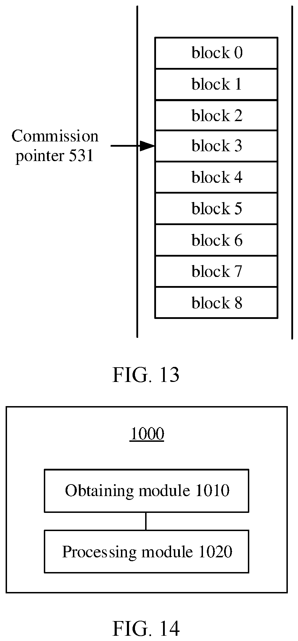

For example, FIG. 13 is a diagram of a block dequeue operation according to an embodiment of this application. Execution statuses of four blocks are queried backward from a commission pointer 531, that is, execution statuses of a block 3, a block 4, a block 5, and a block 6 are queried. If being marked as a completed state, the consecutive block 3, block 4, block 5, and block 6 are all committed in order, and the commission pointer is updated to point to a block 7.

For example, execution statuses of three blocks are queried backward from a commission pointer 531, that is, execution statuses of a block 3, a block 4, and a block 5 are queried. If being marked as a completed state, the consecutive block 3 and block 4 are all committed in order, and the commission pointer is updated to point to a block 5.

Optionally, this application is applied to a general-purpose out-of-order processor, or may be extended to a multi-core system as a hierarchical solution for recording statuses of a plurality of tasks. Embodiments of this application provide a physical implementation solution of a multi-core distributed reorder buffer for the structured instruction set. A micro-instruction commission order between cores is decoupled, so that instruction blocks can be committed out of order between a plurality of cores. This avoids problems such as complex physical cabling and tight timing caused by a centralized reorder buffer.

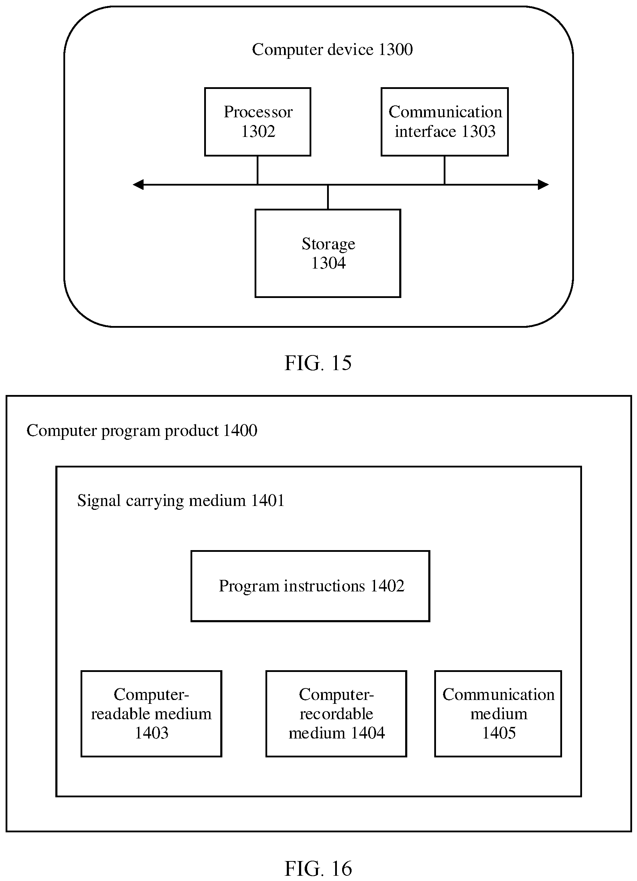

The foregoing describes the instruction execution method according to embodiments of this application. The following describes an apparatus and a device according to embodiments of this application with reference to FIG. 14 and FIG. 15 respectively.

An embodiment of this application further provides a computer storage medium. The computer storage medium stores program instructions, and when a program is executed, some or all of the steps of the instruction execution methods in embodiments corresponding to FIG. 3 to FIG. 13 may be performed.

FIG. 14 is a diagram of an example of a structure of a computer apparatus 1000 according to an embodiment of this application. The computer apparatus 1000 includes an obtaining module 1010 and a processing module 1020.

The obtaining module 1010 is configured to: obtain new blocks delivered by one or more upstream modules, obtain an abnormal signal and an abnormal instruction number, obtain an interruption signal, perform 410 and 440 in the method in FIG. 5, and perform 510 in the method in FIG. 10.

The processing module 1020 is configured to: determine an execution status of a block in a queue and an execution status of an instruction in a block, update a commission block and a commission piece, and perform some or all of the steps in the methods in FIG. 3 to FIG. 13.

FIG. 15 is a diagram of an example of a structure of another computer apparatus 1300 according to an embodiment of this application. The computer apparatus 1300 includes a processor 1302, a communication interface 1303, and a storage 1304. An example of the computer apparatus 1300 is a chip. Another example of the computer apparatus 1300 is a computing device.

The method disclosed in embodiments of this application is applied to the processor 1302, or may be implemented by the processor 1302. The processor 1302 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or a transistor logic device, a discrete hardware component, or the like. The general-purpose processor may be a microprocessor or any conventional processor or the like. In an implementation process, steps in the foregoing methods can be implemented through an integrated logical circuit of hardware in the processor 1302, or by using instructions in a form of software. The processor may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly performed by a hardware decoding processor, or may be performed by using a combination of hardware and software modules in the decoding processor.

The storage 1304 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the storage of the systems and methods described in this specification includes but is not limited to these and any storage of another appropriate type.

The processor 1302, the storage 1304, and the communication interface 1303 may communicate with each other through a bus. The storage 1304 stores executable code, and the processor 1302 reads the executable code in the storage 1304 to perform a corresponding method. The storage 1304 may further include a software module for another running process, for example, an operating system. The operating system may be LINUX^{™}, UNIX^{™}, WINDOWS^{™}, or the like.

For example, the executable code in the storage 1304 is used to implement the methods shown in FIG. 3 to FIG. 13. The processor 1302 reads the executable code in the storage 1304, to perform the methods shown in FIG. 3 to FIG. 13.

In some embodiments of this application, the disclosed method may be implemented as computer program instructions encoded on a computer-readable storage medium or encoded on another non-transitory medium or product in a machine-readable format. FIG. 16 is a schematic local concept view of an example computer program product arranged according to at least some embodiments shown herein. The example computer program product includes a computer program used to execute a computer process on a computing device. In an embodiment, the example computer program product 1400 is provided by using a signal carrying medium 1401. The signal carrying medium 1401 may include one or more program instructions 1402 that may provide, when being run by one or more processors, the foregoing functions or some functions described for the methods shown in FIG. 3 to FIG. 13. Therefore, for example, refer to embodiments shown in FIG. 3 to FIG. 13, one or more features may be assumed by one or more instructions associated with the signal carrying medium 1401.

In some examples, the signal carrying medium 1401 may include a computer-readable medium 1403, for example but not limited to, a hard disk drive, a compact disk (CD), a digital video disc (DVD), a digital tape, a storage, a read-only memory (read-only memory, ROM), or a random access memory (random access memory, RAM). In some implementations, the signal carrying medium 1401 may include a computer-recordable medium 1404, for example but not limited to, a storage, a read/write (R/W) CD, or an R/W DVD. In some implementations, the signal carrying medium 1401 may include a communication medium 1405, for example but not limited to, a digital and/or analog communication medium (for example, an optical fiber, a waveguide, a wired communication link, or a wireless communication link). Therefore, for example, the signal carrying medium 1401 may be delivered through the communication medium 1405 in a wireless form (for example, a wireless communication medium complying with the IEEE 802.11 standard or another transmission protocol). The one or more program instructions 1402 may be, for example, computer-executable instructions or logic implementation instructions. In some examples, the computing device may be configured to provide various operations, functions, or actions in response to the program instructions 1402 that are delivered to the computing device by using one or more of the computer-readable medium 1403, the computer-recordable medium 1404, and/or the communication medium 1405. It should be understood that the arrangement described herein is merely used as an example. Therefore, it should be understood by a person skilled in the art that another arrangement and another element (for example, a machine, an interface, a function, an order, or a function group) can be used instead, and that some elements may be omitted together based on a desired result. In addition, many of the described elements are functional entities that can be implemented as discrete or distributed components, or implemented in any appropriate combination at any appropriate location in combination with another component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An instruction execution method, wherein the method comprises:
determining that an execution status of a first block in a queue is a completed state, wherein the queue comprises a plurality of blocks, the first block is a block with a smallest number in the queue, and the first block comprises at least one instruction;
changing a status of a processor based on an execution result of an instruction in the first block; and
deleting the first block from the queue.

2. The method according to claim 1, wherein the determining that an execution status of a first block in a queue is a completed state comprises:
determining that execution statuses of all instructions comprised in the first block are a completed state.

3. The method according to claim 1 or 2, wherein the method further comprises:
determining that a first piece is a commission piece in a second block and an instruction in the first piece is in a completed state, wherein the second block is any block other than the first block in the queue, the first piece is one of a plurality of pieces comprised in the second block, the first piece comprises at least one instruction, the plurality of pieces in the second block are connected through tail pointers, and the commission piece is a piece that is in the second block and that starts to store an instruction earliest;
deleting the first piece from the second block; and
if the first piece is not a last piece in the second block, updating the commission piece in the second block to a piece to which a tail pointer of the first piece points.

4. The method according to claim 3, wherein the method further comprises:
determining that execution statuses of all instructions in the second block are a completed state; and
setting an execution status of the second block to a completed state.

5. The method according to any one of claims 1 to 4, wherein the method further comprises:
obtaining one or more third blocks, wherein the third block comprises at least one instruction; and
placing the one or more third blocks in the queue in ascending order of numbers.

6. The method according to claim 5, wherein the method further comprises:
storing an instruction in a fourth block into a second piece, wherein the fourth block is one of the one or more third blocks, and the second piece comprises at least one vacant location for storing an instruction.

7. The method according to any one of claims 1 to 6, wherein the method further comprises:
obtaining an abnormal signal and an abnormal instruction number; and
deleting, from the queue, an instruction whose instruction number is greater than or equal to the abnormal instruction number.

8. The method according to any one of claims 1 to 7, wherein the method further comprises:
obtaining an interruption signal; and
deleting an instruction other than an instruction with a smallest number from the queue.

9. The method according to any one of claims 1 to 8, wherein the method further comprises:
if execution of a third instruction is normally completed, setting an execution status of the third instruction to a completed state, wherein the third instruction is any instruction in the queue; or
if an exception occurs during execution of the third instruction, setting the execution status of the third instruction to an abnormal state.

10. A computer apparatus, wherein the apparatus is used in a processor, and the apparatus comprises:
a processing module, configured to determine that an execution status of a first block in a queue is a completed state, wherein the queue comprises a plurality of blocks, the first block is a block with a smallest number in the queue, and the first block comprises at least one instruction, wherein
the processing module is further configured to change a status of the processor based on an execution result of an instruction in the first block; and
the processing module is further configured to delete the first block from the queue.

11. The apparatus according to claim 10, wherein the processing module is specifically configured to:
determine that execution statuses of all instructions comprised in the first block are a completed state.

12. The apparatus according to claim 10 or 11, wherein the processing module is specifically configured to:
determine that a first piece is a commission piece in a second block and an instruction in the first piece is in a completed state, wherein the second block is any block other than the first block in the queue, the first piece is one of a plurality of pieces comprised in the second block, the first piece comprises at least one instruction, the plurality of pieces in the second block are connected through tail pointers, and the commission piece is a piece that is in the second block and that starts to store an instruction earliest;
delete the first piece from the second block; and
if the first piece is not a last piece in the second block, update the commission piece in the second block to a piece to which a tail pointer of the first piece points.

13. The apparatus according to claim 12, wherein the processing module is further configured to determine that execution statuses of all instructions in the second block are a completed state; and
the processing module is further configured to set an execution status of the second block to a completed state.

14. The apparatus according to any one of claims 10 to 13, further comprising an obtaining module, configured to obtain one or more third blocks, wherein the third block comprises at least one instruction; and
the processing module is further configured to place the one or more third blocks in the queue in ascending order of numbers.

15. The apparatus according to claim 14, wherein the processing module is further configured to store an instruction in a fourth block into a second piece, wherein the fourth block is one of the one or more third blocks, and the second piece comprises at least one vacant location for storing an instruction.

16. The apparatus according to any one of claims 10 to 15, wherein the obtaining module is further configured to obtain an abnormal signal and an abnormal instruction number; and
the processing module is further configured to delete, from the queue, an instruction whose instruction number is greater than or equal to the abnormal instruction number.

17. The apparatus according to any one of claims 10 to 16, wherein the obtaining module is further configured to obtain an interruption signal; and
the processing module is further configured to delete an instruction other than an instruction with a smallest number from the queue.

18. The apparatus according to any one of claims 10 to 17, wherein the processing module is specifically configured to:
if execution of a third instruction is normally completed, set an execution status of the third instruction to a completed state, wherein the third instruction is any instruction in the queue; or
if an exception occurs during execution of the third instruction, set the execution status of the third instruction to an abnormal state.

19. A computer device, comprising a processor, wherein the processor is configured to: be coupled to a storage, and read and execute instructions and/or program code in the storage, to perform the method according to any one of claims 1 to 9.

20. A chip system, comprising a logic circuit, wherein the logic circuit is configured to: be coupled to an input/output interface, and transmit data through the input/output interface, to perform the method according to any one of claims 1 to 9.

21. A computer-readable medium, wherein the computer-readable medium stores program code, and when the computer program code is run on a computer, the computer is enabled to perform the method according to any one of claims 1 to 9.
